# EUROPEAN PATENT APPLICATION

(11) **EP 1 095 909 A1**
(43) Date of publication of application: **02.05.2001**
(21) Application number: 00123655.3
(22) Date of filing: 30.10.2000
(51) Int. Cl.: C02F 1/30, C02F 1/68

(54) **Active-water producing apparatus**

(30) Priority: 29.10.1999 JP 30987699; 03.03.2000 JP 2000058198
(71) Applicant: MINO GANRYO KAGAKU CORPORATION, Toki-shi, Gifu-ken, 509-5202 (JP)
(72) Inventor: Kakamu, Yoshinori, Toki-shi, Gifu-ken, 509-5202 (JP); Kakamu, Shinichi, Toki-shi, Gifu-ken, 509-5202 (JP); Kakamu, Shukichi, Toki-shi, Gifu-ken, 509-0301 (JP)
(74) Representative: Leson, Thomas Johannes Alois, Dipl.-Ing.

(57) **Abstract**

An active-water producing apparatus (100) is provided. Water flows into an outer cylinder (10) through a water inlet (12) of a lid (11) provided on a bottom side. Then, the water is spouted from water inlet holes of a bottom (32) of a flow container and forms a circulating water flow. Thereby, rare-earth ceramic balls are moved in all directions while being turned in an interior space of the flow container (30). The balls are uniformly moved. The circulating water become in contact with the balls efficiently and spouted from a water outlet (16) of a lid (15) provided at a top side.

## Description

### BACKGROUND OF THE INVENTION

### 1. Field of the Invention

The present invention relates to an active-water producing apparatus for producing active water by passing the water through a frame body containing mass of granulated ceramics or crushed natural stones.

### 2. Description of the Related Art

Conventionally, Japanese Laid Open Utility Model Publication Nos. HEI 4-45593 and HEI 6-11836 disclose the technology related to an active-water producing apparatus. In these publications, active water is produced by admitting the water into a container from its bottom. Then, the flowing water is brought in contact with the granulated materials contained therein, and then discharged from the top of the container.

In the active-water producing apparatuses, it is important to prevent the clogging of the gaps between the granulated materials and water pressure loss by efficiently bringing the flowing water in contact with every granulated material uniformly. The active-water producing apparatus constituted by a tank that employs variable pump-pressure uses a single-layer housing tower capable of relatively easily adjusting the flow of the content. However, in most of general households and ordinary workplaces, an active-water producing apparatus is often connected directly to the water pipe and used at a water pressure ranging from 2 to 5 atm. In order to efficiently make the water in contact with the granules under such conditions, most of the active-water producing apparatuses are composed of multi-stage types.

Such a multi-stage active-water producing apparatus is disclosed in the aforementioned Japanese Utility Model Publication No. HEI 4-45593. In general, the multi-stage active-water producing apparatus has a plurality of water-permeable flat partitions arranged in multiple stages to divide the container into a plurality of sections. Then, the granulated materials are contained in each of the resultant sections. For example, the multi-stage active-water producing apparatus with the aforementioned structure may contain tourmaline ceramic balls in each section. It is reported that the flowing water can contact successfully with the ceramic balls even if they are contained in each section up to 40 to 80 % of the volume ratio.

In fact, however, as water flows from the lower stage to the upper stage, its flowability is reduced due to the pressure loss. It was found from the experimentation and research of the inventors that, in the case of the tap water, the flowing water can contact with the ceramic balls up to several stages only if the level of the ceramic balls is up to approximately 10 to 20 cm. Accordingly, the apparatus has to be enlarged to make the water effectively contacted with the tourmaline ceramic balls that should be contained in the tank in an amount of 30 to 50 kg in practical use.

More specifically, in case the tap water at the pressure of 2 to 5 atm. is directly connected to the single-layer housing tower, the water of an economical amount is hard to be in contact with the ceramic balls. The multi-stage flow contact technology is more suitable for the direct connection of the tap water. However, in this case as well, it is found that the pressure loss occurs while the water flows from the lower stage toward the upper stage, and movement of the content tends to be degraded as the water flows upward.

Recently, various kinds of ceramic granulated materials have been used as the content. For example, since high-temperature-baked rare-earth ceramic balls are not susceptible to wear, it is desirable that they are in rapid and hard contact with each other and with a wall, in addition to the contact the water. In case of the intermediate-temperature-baked tourmaline ceramic balls, the balls have to be in contact with each other at an intermediate strength. Moreover, some care is necessary to make the water in contact with the ceramic balls. Moreover, in case of crashed natural stones such as "Iou-seki" (described later), friction between the balls should be prevented as much as possible and the balls must be in gentle contact with the water. Thus, an active-water producing apparatus is required to be able to set a structure and operating conditions as desired according to the property of the content.

### SUMMARY OF THE INVENTION

It is an object of the present invention to provide a highly practical active-water producing apparatus that produces active water by making flowing water in uniform contact with a content and that can be applied to a multi-stage structure employing various types of contents as required. According to the first aspect of the invention, there is provided

### BRIEF DESCRIPTION OF THE DRAWINGS

Fig. 1 is a cross-sectional view showing an entire structure of an active-water producing apparatus according to a first embodiment of the invention.
Fig. 2 is a plan view of a flow container as a component of Fig. 1.
Fig. 3 is a cross-sectional view of the flow container of Fig. 2.
Fig. 4 is a cross-sectional view showing an entire structure of an active-water producing apparatus according to a modification of the first embodiment of the invention.
Fig. 5 is a plan view of a flow container as a component of Fig. 4.
Fig. 6 is a cross-sectional view of the flow container of Fig. 5.
Fig. 7 is a cross-sectional view showing an entire structure of an active-water producing apparatus according to a second embodiment of the invention.
Fig. 8 is a plan view of a first flow container as a component of Fig. 7.
Fig. 9 is a cross-sectional view of the first flow container of Fig. 8.
Fig. 10 is a plan view of a first flow container as a component of Fig. 7.
Fig. 11 is a cross-sectional view of the first flow container of Fig. 10.
Fig. 12 is a cross-sectional view showing an entire structure of an active-water producing apparatus according to a modification of the second embodiment of the invention.
Fig. 13 is a plan view of a first flow container as a component of Fig. 12.
Fig. 14 is a cross-sectional view of the first flow container of Fig. 13.
Fig. 15 is a cross-sectional view showing an entire structure of an active-water producing apparatus according to another modification of the second embodiment of the invention.
Fig. 16 is a cross-sectional view showing an entire structure of an active-water producing apparatus according to a third embodiment of the invention.
Fig. 17 is a cross-sectional view of a cylindrical portion of a flow container as a component of Fig. 16.
Fig. 18 is a plan view of a bottom of the flow container of Fig. 16.
Fig. 19 is a cross-sectional view of the bottom of the flow container of Fig. 16.

### DETAILED DESCRIPTION OF THE INVENTION

Several embodiments of the invention are described hereafter. The same reference numeral is used to show the same element throughout the embodiments.

### [FIRST EMBODIMENT]

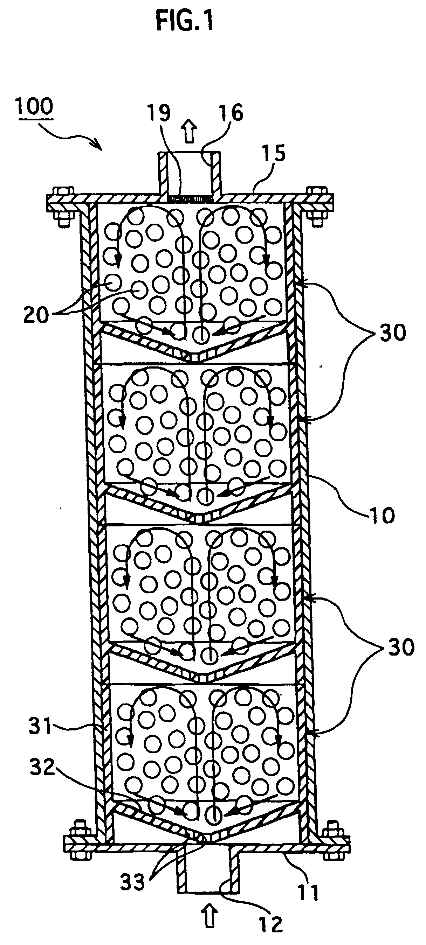

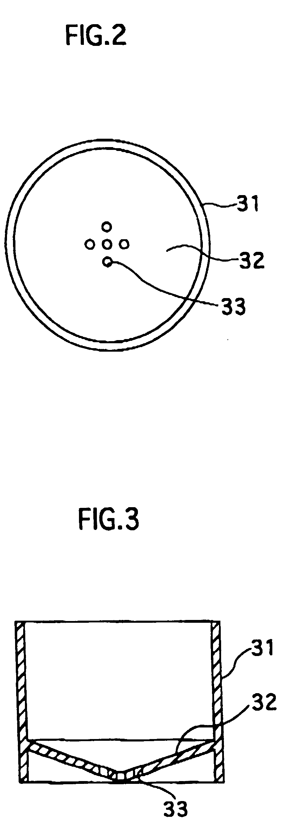

Fig. 1 shows the overall structure of an active-water producing apparatus according to the first embodiment of the invention. Figs. 2 and 3 show one of flow containers shown in Fig. 1.

In Figs. 1 and 2, an exterior container of the active-water producing apparatus 100 is provided with a stainless steel or a resin outer cylinder 10. A lid 11 having a water inlet 12 at its center is mounted on the bottom of the outer cylinder 10. A lid 15 having a water outlet 16 at its center is mounted on the top of the outer cylinder 10. The water outlet 16 is provided with a filter 19. The lids 11, 15 are both detachably bolted to the outer cylinder 10 through packing (not shown), respectively.0

The outer cylinder 10 contains a plurality of stacked flow containers 30. Each of the flow containers 30 contains a plurality of rare-earth ceramic balls 20 to be described later. The flow container 30 is a bottomed, cylindrical resin container. A bottom 32 integrated with a cylindrical portion 31 of each flow container 30 has a conical shape with its tip facing downward. The tip of the bottom 32 and the lower end of the cylindrical portion 31 are located at the same level. A plurality of water inlet holes 33 each having a diameter of about 3 mm are formed at the tip of the bottom 32 of the flow container 30.

The flow container 30 contains the rare-earth ceramic balls 20 as ceramic granulated materials at the volume ratio of 50% or more. The flow containers 30 are inserted into the outer cylinder 10 in the stacked state. According to the volume ratio of the rare-earth ceramic balls 20, four stages of the flow containers 30 are required to obtain desired active-water producing capability.

The rare-earth ceramic balls 20 may be formed from monazite that is readily available as an industrial material among the radioactive rare-earth minerals. Monazite is a mineral containing 60% of rare-earth oxide and 7% of thorium oxide as a natural radioactive element. In this embodiment, however, it is diluted with other white minerals into the radioactivity concentration of 370 becquerel/gram or less so as to be used without submitting the notification to the authorities under the Nuclear Regulatory Law. The rare-earth ceramic balls 20 are produced by blending this monazite with kaolin for molding, and baking the mixture at 1200 °C into ceramic form.

Hereinafter, operation of the active-water producing apparatus according to the first embodiment will be described.

In the active-water producing apparatus 100, the water inlet 12 of the bottom lid 11 is connected to the water pipe that allows water to flow therethrough. Thus, the water collected at the bottom 32 of the lowest-stage flow container 30 is spouted upward into the flow container 30 through a plurality of inlet holes 33 formed at the tip of the bottom 32. As shown by the arrows in Fig. 1, the water spouted upward from the inlet holes 33 of the flow container 30 along the central axis thereof flows from the ceiling wall to and along the inner wall, thereby fed back down to the bottom within the flow container 30. At this time, the rare-earth ceramic balls 20 are turned and moved in all directions, resulting in the effective contact with the flowing water. Then, the water filling the lowest-stage flow container 30 is spouted upward from the inlet holes 33 of the next upper-stage flow container 30 located downstream. In this way, the contact of the flowing water with the ceramic balls 20 proceeds until the water is discharged through the filter 19 and the outlet 16 of the lid 15 located over the highest-stage flow container 30. Active water is, thus, produced with the rare-earth ceramic balls 20.

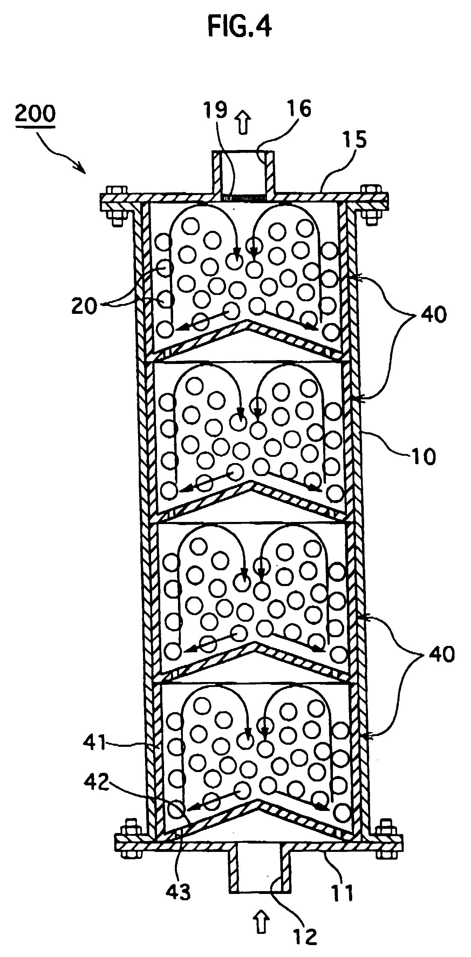

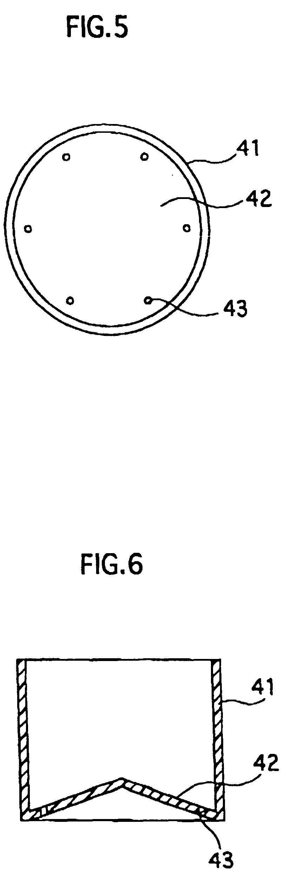

Hereinafter, a modified example of the active-water producing apparatus according to the first embodiment of the present invention will be described referring to Figs. 4 to 6. Fig. 4 shows the overall structure of the active-water producing apparatus according to the modified example. Figs. 5 and 6 show one of flow containers shown in Fig. 4.

As shown in Figs. 4 to 6, an active-water producing apparatus 200 is substantially the same as the active-water producing apparatus 100 except that a shape of a flow container 40 is different from that of the flow container 30 shown in Fig. 1. Each flow container 40 of the modified example is a bottomed, cylindrical resin container. A bottom 42 integrated with a cylindrical portion 41 of each flow container 40 has a conical shape with its tip facing upward. A plurality of water inlet holes 43 each having a diameter of about 3 mm are formed on the circumference of the bottom 42.

Like the first embodiment, the flow container 40 contains the rare-earth ceramic balls 20 to reach the volume ratio of 50% or more. The flow containers 40 are inserted into the outer cylinder 10 in the stacked state. According to the capacity ratio of the rare-earth ceramic balls 20, four stages of the flow containers 40 are required to obtain desired active-water producing capability.

Next, operation of the active-water producing apparatus according to the modified example will be described.

In the active-water producing apparatus 200, the water inlet 12 of the bottom lid 11 is connected to the water pipe that allows water to flow therethrough. Thus, the water collected at the bottom 42 of the lowest-stage flow container 40 is spouted upward into the flow container 40 through a plurality of inlet holes 43 formed on the periphery of the upward-pointed conical bottom 42. As shown by the arrows in Fig. 3, the water spouted upward from the inlet holes 43 along the inner wall of the flow container 40 flows from the ceiling wall to and along the central axis, thereby fed back down to the bottom within the flow container 40. At this time, the rare-earth ceramic balls 20 are turned and moved in all directions, resulting in the effective contact with the flowing water. Then, the water filling the lowest-stage flow container 40 is spouted upward from the inlet holes 43 of the next upper-stage flow container 40 located downstream. In this way, the contact of the flowing water with the ceramic balls 20 proceeds until the water is discharged through the filter 19 and the outlet 16 of the lid 15 located over the highest-stage flow container 40. Active water is, thus, produced with the rare-earth ceramic balls 20.

Hereinafter, effects of the active-water producing apparatus will be described.

When the water is brought into contact with the rare-earth ceramic balls 20, the water absorbs most of α, β and γ rays emitted from the rare-earth ceramic balls 20, thereby producing the substances as identified below. It is reported that H₃O⁺ (3.6), OH⁻ (1), e⁻ aq (2.7), 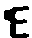 OH (2.8), 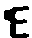 H (0.55), H₂ (0.45) and H₂O₂ (0.7) are produced from H₂O as the water, and that the number of products per 100 eV shown in each of the parentheses reaches the equilibrium value within 10⁻⁸ second.

It is also known that the rare-earth ceramic balls 20 emit ordinary-temperature far infrared radiation to the water with the energy of the heat resulting from the reaction of internal radiation of the rare-earth ceramic balls 20, and that the water subjected to the far infrared radiation resonantly vibrates to reduce the surface tension. The rare-earth ceramic balls 20 baked at a high temperature are hardly susceptible to wear, and the reaction between the radiation and the water proceeds rapidly as described above. Thus, the rare-earth ceramic balls 20 can be resistant to the hard contact with the flowing water. On the other hand, the radioactivity concentration at the surface of the rare-earth ceramic balls 20 is legally limited. Therefore, it is preferable to make the balls 20 keep the hard contact with the flowing water so as to increase the concentration of the product. As described above, the active-water producing apparatuses 100, 200 shown in Figs. 1 and 4 are suitable for producing active-water.

The dissolvablility of the water brought into contact with the rare-earth ceramic balls 20 is increased by the above-mentioned products in the water and the ionic products resulting from the reaction between such products. Moreover, the active water also causes water-cluster segmentation as well as the far infrared radiation. In particular, 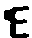 OH radicals strongly decompose the bio-organic matter (such as protein and fat) and exhibit the antibacterial/deodorizing properties. Such active water is expected to facilitate the growth of plants when used for gardening, water culture, greenhouse culture and the like.

In the active-water producing apparatuses 100, 200, the rare-earth ceramic balls 20 are turned and moved in all directions by the internal reflux water. Therefore, the water within the apparatus moves uniformly while efficiently contacted with the rare-earth ceramic balls 20, and then, is discharged from the outlet 16 of the lid 15. Thus, the active-water producing apparatuses 100, 200 fully impart the active-water producing capability, by which the water passing therethrough has a desired property such as antibacterial and deodorizing function.

For household use, the tap water is treated with crashed natural stones in addition to the rare-earth ceramic balls 20 and general tourmaline ceramic balls. However, the water for household use is required to have a prescribed quality as drinking water. In addition, various kinds of water are demanded for household use, such as good drinking water, kitchen water or washing water capable of desirably removing the oil, bath water capable of keeping the body warm after a bath, and deodorizing flushing water. There are also specific requirements for the property of the wastewater. In general, however, chemical treatment of the water is not preferred. Therefore, it is desired to satisfy such requirements by merely passing the water through the active-water producing apparatus.

The use of only a single kind of the rare-earth ceramic balls or tourmaline ceramic balls is insufficient to meet the aforementioned requirements for the human body. Accordingly, the balls of several kinds have to be combined. Then, titanium ceramic balls were selected as the one mainly for the antibacterial and deodorizing purposes, and tested for the effects. Prototype titanium ceramic balls were produced by blending 50% of anatase-type TiO₂, 10% of radioactive source substance, 20% of titanium-containing borosilicate frit, 10% of an agent for rendering porosity and 10% of other elements, grinding the mixture into powder, forming the powder into a ball with a diameter of 7 mm, and baking at 900°C into titanium ceramic balls.

In order to examine the property of the titanium ceramic balls, powders were prepared by blending, grinding, drying the aforementioned materials and then baking them at 700°C. The powders were tested for basic antibacterial and deodorizing properties. As a comparative example, powders were prepared by baking anatase-type TiO₂ at 700°C and tested, too.

In the measurement for the antibacterial property, 0.2 g of a sample was put into a vial, and 0.2 ml of bacterial liquid adjusted to the viable count of 10⁵ was dropped thereto. The resultant mixture was cultured at 37.0°C for 18 hours. Then, the bacteria were washed away, and a 10-times-dilution series was prepared. The viable count thereof was obtained, and the difference in the viable count was calculated. Staphylococcus aureus was used for the measurement. In the measurement for the deodorizing property, 1 g of the sample and 600 ml of ammonia gas were enclosed in a tetrapack, and the gas concentration was measured (twice) after three hours. The results shown in the following table 1 were obtained.

**[Table 1]**

| Sample | Antibacterial | Deodorizing | Notes |
|---|---|---|---|
| TiO₂ (Comparative) | 3.5 | 80 | 1.6 or more is effective for antibacterial property |
| Titanium Ceramic Material | 5.2 | 95 | |

According to the result of Table 1, the titanium ceramic balls have excellent antibacterial and deodorizing properties. However, the titanium ceramic balls cannot always have antibacterial and deodorizing functions on the flowing water. When TiO₂ is subjected to the ultraviolet radiation (or fluorescent light illumination), H₂O is decomposed by the photocatalytic effect at the surface of TiO₂, thereby producing 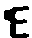 OH radicals. TiO₂ has the antibacterial and deodorizing effects on the water by such 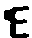 OH radicals. Accordingly, it is advantageous to utilize the photocatalytic effect of titanium, in addition to the antibacterial and deodorizing effects of the material itself.

By placing such titanium ceramic balls into the active-water producing apparatus 100 and bringing them in hard contact with the flowing water by a series of operations, the antibacterial and deodorizing effects on the water would be obtained. In the case of utilizing the photocatalytic effect, the titanium ceramic balls must be exposed to the sunlight or the fluorescent light illumination. Therefore, the outer cylinder 10 of the active-water producing apparatus 100 must be formed of a clear glass or clear resin, and also the flow containers 30 inserted into the outer cylinder 10 must be formed of a clear resin, in order to introduce an increased amount of light. For business use, it would be necessary to make the active-water producing apparatus 100 using the outer cylinder 10 with a diameter of at least 30 cm and a height of at least 150 cm. Since the movement of the content can he seen from the outside, the clear container would have an improved commercial value.

### [SECOND EMBODIMENT]

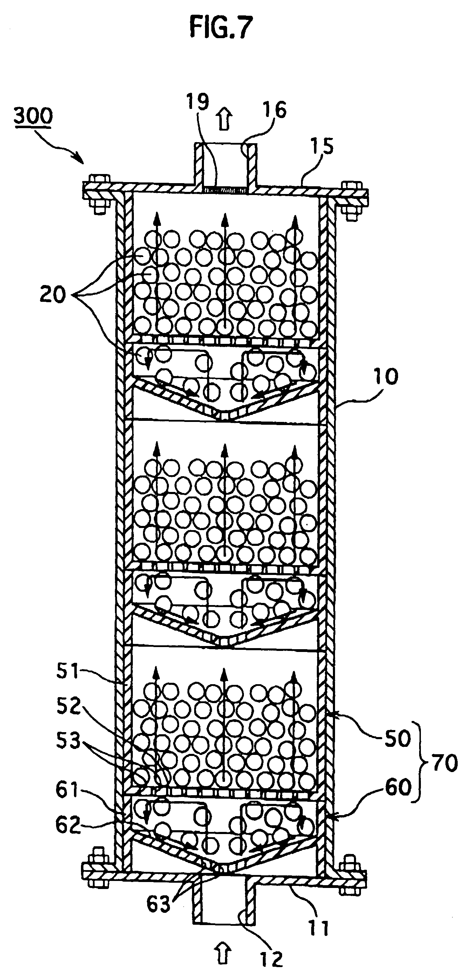

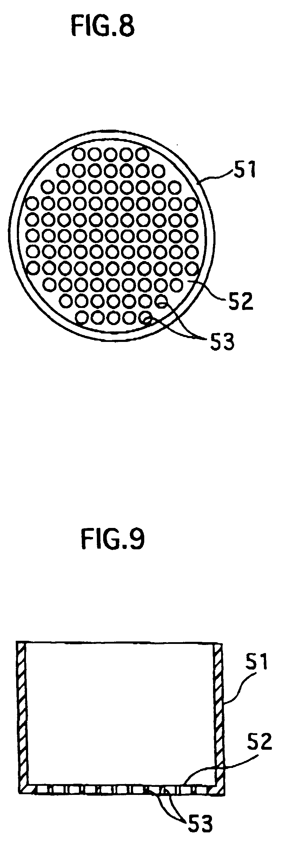

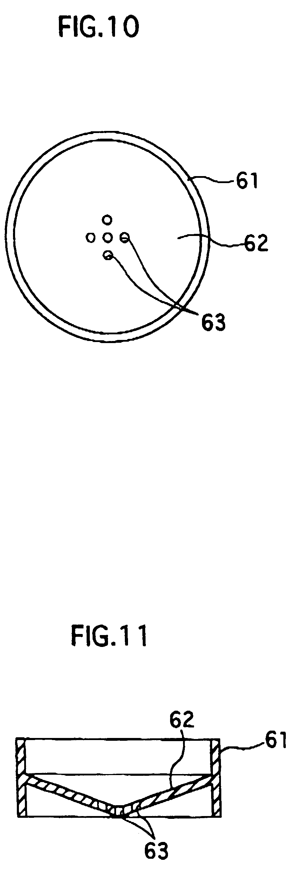

Fig. 7 shows the overall structure of an active-water producing apparatus according to a second embodiment of the present invention. Figs. 8 and 9 show a first flow container of Fig. 7. Figs. 10 and 11 show a second flow container of Fig. 7.

In the present embodiment, described herein is an active-water producing apparatus which is capable of adjusting the contact degree of the flowing water when using the ceramic granulated materials or crashed natural stones for which, like tourmaline ceramics baked at an intermediate temperature, the friction is desirable but wear is required to be avoided as much as possible.

In Figs. 7 to 11, the exterior container of an active-water producing apparatus 300 contains three flow-container assembly units 70 stacked within an outer cylinder 10. Each flow-container assembly unit 70 is defined by a first flow container 50 and a second flow container 60. The first container 50 forms a housing chamber containing washing tourmaline ceramic balls 21 (to be described later) at a high volume ratio. The second flow container 60 is located in a lower, upstream stage of the corresponding first flow container 50, and forms a water-circulation chamber containing turning ceramic balls 22 (to be described later) at a low volume ratio. The first flow container 50 is a bottomed, cylindrical container formed of a clear resin. A plurality of water inlet holes 53 each having a diameter of about 3 mm are formed uniformly on the whole flat bottom 52 integrated with a cylindrical portion 51 of the first flow container 50. The second flow container 60 is a bottomed, cylindrical container formed of a clear resin. A bottom 62 integrated with a cylindrical portion 61 of the second flow container 60 has a conical shape with its tip facing downward. The tip of the bottom 62 and the lower end of the cylindrical portion 61 are located at the same level. A plurality of water inlet holes 63 each having a diameter of about 3 mm are formed at the tip of the bottom 62 of the second flow container 60.

The first flow container 50 contains the washing tourmaline ceramic balls 21 at the volume ratio of 50% or more. The second flow container 60 contains the rotating ceramic balls 22 at the volume ratio of 10% or more.

The washing tourmaline ceramic balls 21, which contain 50% of tourmaline powder, are produced by blending the tourmaline powder with borosilicate non-lead frit and others, grinding and dehydrating the resultant mixture. It is, then, formed into balls each having a diameter of 7 mm, and baked at 850°C or less as the irreversible transition point of tourmaline. The turning ceramic balls 22 are formed of general tourmaline ceramics baked at a temperature higher than that of the washing tourmaline ceramic balls 21 by 200°C, and have a diameter of 5 to 6 mm that is smaller than that of the washing tourmaline ceramic balls 21.

Hereinafter, operation of the active-water producing apparatus according to the second embodiment will be described.

Like the first embodiment, in the active-water producing apparatus 300, the water inlet 12 of the lid 11 is connected to the water pipe that allows water to flow therethrough. Thus, water collected at the bottom 62 of the second flow container 70 of the lowest-stage flow-container assembly unit 70 is spouted upward into the assembly unit 70 through a plurality of inlet holes 63 formed at the tip of the bottom 62. As shown by the arrows in Fig. 5, the water spouted upward from the inlet holes 63 of the second flow container 60 along the central axis flows from the ceiling wall to and along the inner wall, thereby fed back down to the bottom within the second flow container 60 together with the turning ceramic balls 22.

Then, the water fills the second flow container 60 and is spouted upward thereafter from a large number of inlet holes 53 at the bottom 52 of the upper-stage first flow container 50 located downstream. The water thus spouted forces the washing tourmaline ceramic balls 21 upward under a uniform pressure, causing vertical and turning movement of the washing tourmaline ceramic balls 21. Thus, the flowing water is effectively brought into contact with the ceramic balls 21. After contacted with the washing tourmaline ceramic balls 21 and filled the first flow container 50, the water is spouted from the inlet holes 63 of the second flow container 60 of the next upper-stage flow-container assembly unit 70 located downstream. The operation proceeds repeatedly in the similar manner.

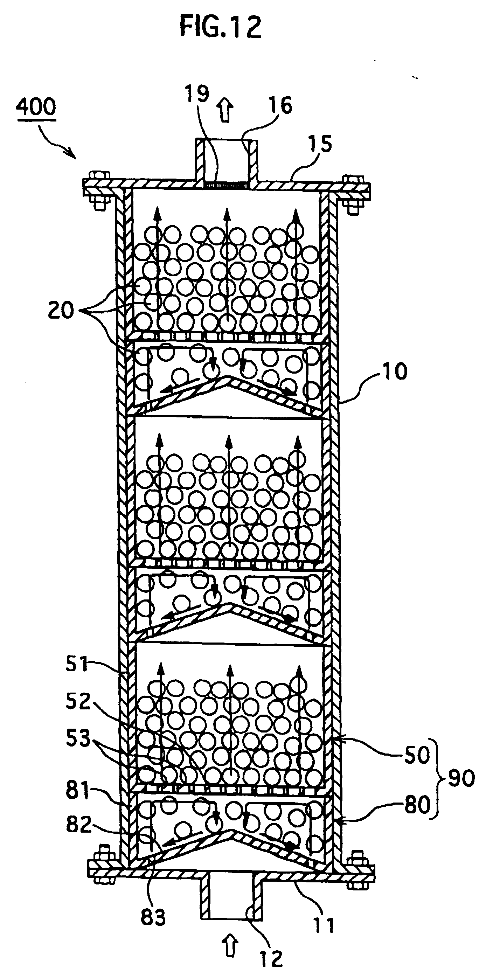

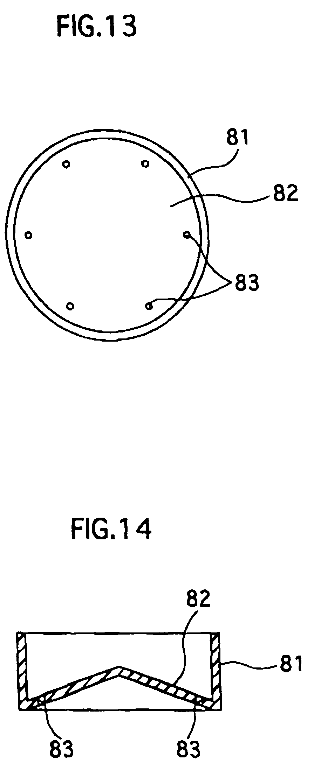

Hereinafter, a modified example of the active-water producing apparatus according to the second embodiment of the present invention will be described referring to Figs. 12, 13, 14 together with Figs. 8 and 9. Fig. 12 shows the overall structure of the active-water producing apparatus according to the modified example. Figs. 13 and 14 show one of the second flow containers shown in Fig. 12.

As shown in Figs. 8, 9, 12, 13 and 14, in the active-water producing apparatus 400, a single flow-container assembly unit 90 is defined by a first flow container 50 and a second flow container 80. In the modified example, only the shape of the second flow container 80 is different from that of the second flow container 60 shown in Fig. 7. The second flow container 80 of the modified example is a bottomed, cylindrical container formed of a clear resin. A bottom 82 integrated with a cylindrical portion 81 has a conical shape with its tip facing upward. A plurality of water inlet holes 83 each having a diameter of about 3 mm are formed on the circumference of the bottom 82.

Like the second embodiment, the first flow container 50 contains the washing tourmaline ceramic balls 21 at the volume ratio of 50% or more. The second flow container 80 contains the turning ceramic balls 22 at the volume ratio of 10% or more.

Hereinafter, operation of the active-water producing apparatus according to the modification will be described.

In the active-water producing apparatus 400 having three stacked flow-container assembly units 90, the water inlet 12 of the lid 11 is connected to the water pipe that allows water to flow therethrough. Thus, water collected at the bottom 82 of the second flow container 80 of the lowest-stage flow-container assembly unit 90 is spouted upward into the assembly unit 90 through a plurality of inlet holes 83 formed on the circumference of the bottom 82. As shown by the arrows in Fig. 12, the water spouted upward from the inlet holes 83 along the inner wall of the second flow container 80 flows from the ceiling wall to and along the central axis, thereby fed back down to the bottom within the second flow container 80 together with the rotating ceramic balls 22.

Then, the water that filled the second flow container 80 is spouted upward from a large number of inlet holes 53 at the bottom 52 of the upper-stage first flow container 50 located downstream. The water thus spouted forces the washing tourmaline ceramic balls 21 upward under a uniform pressure, causing vertical and turning movement of the washing tourmaline ceramic balls 21. Thus, the water is effectively brought into flow contact with the ceramic balls 21. The water flow contacts with the washing tourmaline ceramic balls 21, fills the first flow container 50 and then is spouted from the inlet holes 83 of the second flow container 80 of the next upper-stage flow-container assembly unit 90 located downstream. The operation proceeds repeatedly in the similar manner.

It is assumed that the water circulates more actively in the second flow container 60 of the active-water producing apparatus 300 of Fig. 7 having the conical bottom 62 pointing downward, than in the second flow container 80 of the active-water producing apparatus 400 shown in Fig. 12 having the conical bottom 82 pointing upward. However, the comparison by the flow test using the turning ceramic balls 22 shows substantially no difference between those cases.

The washing tourmaline ceramic balls 21 electrolyze (ionize) the water by the energy of the current originated from an inherent permanent electrode current of tourmaline and static electricity resulting from, e.g., the friction between tourmaline and the water and between solid bodies. As a result, positive (+) and negative (-) ions are produced as given by the following formula (1):

2H₂O ⇔ H₃O⁺ + OH⁻ (1).

The number of positive (+) ions produced is the same as that of negative (-) ions. The reaction continues so long as the current is produced among the washing tourmaline ceramic balls 21 to be in contact with water. These ions conduct so-called ion cleaning. That is, the negative (-) ions trap oil stains to be removed for emulsification, whereas the positive (+) ions trap mud stains to be removed. The ordinary-temperature far infrared radiation emitted from the ball surface with the electrical energy of tourmaline causes resonant vibration of the water, thus reducing the cluster size and surface tension of the water. As a result, water permeation is enhanced to facilitate washing function.

For example, the following effects have been recognized. First, a very small amount of oxide semiconductor component eluted from the washing tourmaline ceramic balls 21 into the water is accommodated in pores of a washing surface of the balls 21. The oxide semiconductor component exposed to the energy of the sunlight produces a weak current, thus preventing adhesion of the dirt. Moreover, boron ions eluted simultaneously from the washing tourmaline ceramic balls 21 are accumulated in the pores of the washing surface, thus forming an inorganic polymer coating film that is lustrous under the light. From the foregoing phenomena, the following exemplary effects can be obtained. For example, in case of washing the car, H₃O⁺ makes iron passive for rust prevention by applying the charges thereto, and eliminates the static electricity of a car washing brush as well as eliminates the positive (+) charges. Thus, the number of negative (-) ions is increased, and the water is rendered more alkaline, which further facilitates the washing. Accordingly, the active water obtained by the present invention is completely desirable for the washing purpose, and, particularly, will be increasingly used as the car washing water.

Moreover, the active-water producing apparatuses 300, 400 of the present embodiment can be applied to the one employing the crashed natural stones as the content. In general, stones such as "Iou-seki (quartz diorite porphyrite)" and "Bakuhan-seki" are used as crashed natural stones. The "Iou-seki" is a kind of medicinal stone produced mainly at "Iou-mountain" of Ishikawa and Toyama prefectures in Japan. The "Bakuhan-seki (healstone)" is another kind of medicinal stone produced mainly in China. It belongs to quartz porphyry or granite and contains alkaline feldspar and quartz as main components.

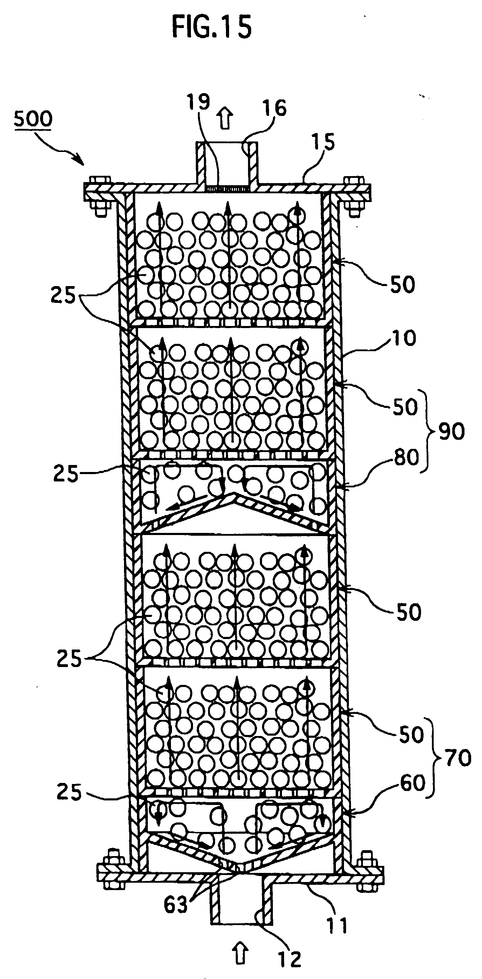

However, they are often produced as crashed particles that are irregular in size with a diameter ranging from 5 to 15 mm. Accordingly, it is necessary to sufficiently bring them into contact with the water, while preventing them from flowing in the water so as to suppress the friction as much as possible. Therefore, the structure of the active-water producing apparatus 400 is used in Fig. 12 in which a thick content layer is provided in the housing chamber and in which an upward conical shape is used for the water circulation. Alternatively, an active-water producing apparatus 500 as shown in Fig. 15 may be used. More specifically, in the upstream at the bottom of the outer cylinder 10, the first container 50 is stacked on the flow-container assembly unit 70 shown in Fig. 7. In the downstream side, the first flow container 50 is stacked on the flow-container assembly unit 90 shown in Fig. 12. The container contains crashed natural stones 25 at a predetermined volume ratio.

According to the active-water producing apparatus 300 of the second embodiment or the active-water producing apparatus 400 of the modified example thereof, the same effects as those of the first embodiment can be obtained.

According to the active-water producing apparatuses of the foregoing embodiments, the inlet holes 33, 43, 63 are formed in the bottom 32, 42, 62 so as to penetrate it along the axial direction of the outer cylinder 10. However, the present invention may be embodied by having the inlet holes 33, 43, 63 tilted so that the water flows in a spiral pattern. In this case, an integrated value of the contact area and the contact time between the water and the ceramic granulated matter 20 or crashed natural stones are increased, whereby the effective contact time can be increased. Accordingly, the active-water producing capability would be significantly improved.

Moreover, the cylindrical portion 51 of the first flow container 50 of the second embodiment is provided to form a prescribed space between adjacent second flow containers 60. Accordingly, the cylindrical portion 51 may be eliminated. For example, it is possible to form a projection(s) at the inner surface of the outer cylinder 10 so that the second flow container 60 can be engaged with the projection(s) when being inserted beyond the projection(s) within the outer cylinder 10. Alternatively, the cylindrical portion 51 may be eliminated by placing the ceramic granulated materials 20 or crashed natural stones between one of the second flow containers 60 and the other adjacent thereto.

### [THIRD EMBODIMENT]

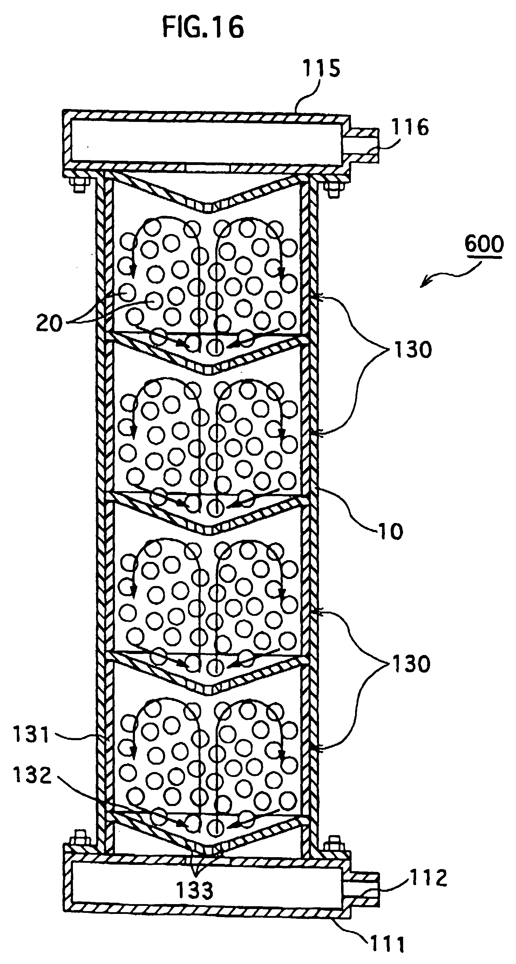

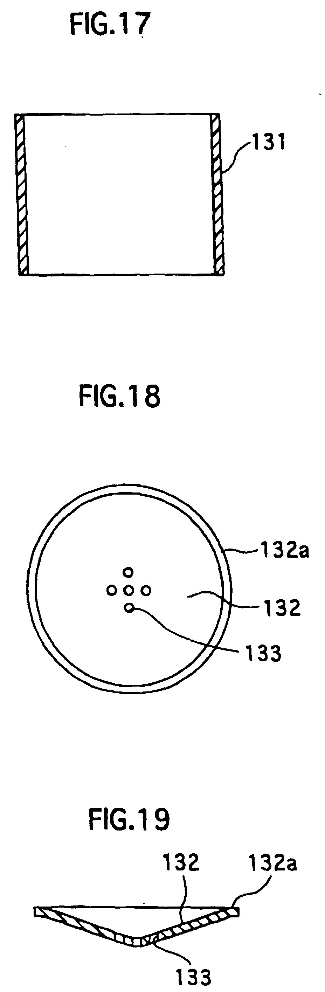

Fig. 16 shows the overall structure of an active-water producing apparatus according to a third embodiment of the present invention. Figs. 17, 18 and 19 show one of flow containers shown in Fig. 16.

In Figs. 16 to 19, an exterior container of the active-water producing apparatus 600 has a lid 111 mounted on the bottom of the outer cylinder 10. The lid 111 has a water inlet 112 in its center. A lid 115 having a water outlet 116 at its center is mounted on the top of the outer cylinder 10. The lids 111, 115 are both detachably bolted to the outer cylinder 10 through packing (not shown). The third embodiment is different from the first and the second embodiments in that the space within the outer cylinder 10 communicates with the inlet 112 or outlet 116 through the inside of the lids 111, 115.

The outer cylinder 10 contains a plurality of stacked flow containers 130. The flow containers 130 contain the above-described rare-earth ceramic balls 20 in a plurality of colors. The flow container 130 is defined by a cylindrical portion 131 formed of a clear resin and a bottom 132 closely attached thereto. The bottom 132 has a conical shape with its tip facing downward. A plurality of water inlet holes 133 each having a diameter of about 3 mm are formed at the tip (lower portion) of the bottom 132. The cylindrical portion 131 and the bottom 132 are separated from each other. The bottom 132 has a predetermined thickness. In addition, the bottom 132 has an annular portion 132a around its periphery so that it can be placed on the end of the cylindrical portion 131. The cylindrical portion 131 and the annular portion 132a of the bottom 132 may be bonded together, although not necessarily.

The flow container 130 contains the rare-earth ceramic balls 20 at the volume ratio of 50% or more. The flow containers 130 are inserted into the outer cylinder 10 in the stacked state with the bottom 132 placed on top of the highest-stage flow container 130. According to the ratio of the rare-earth ceramic balls 20, four stages of the flow containers 130 are required to obtain desired active-water producing capability.

The rare-earth ceramic balls 20 of the present embodiment may be manufactured as described in the first embodiment. Alternatively, the ceramic granulated materials or crashed natural stones including the rare-earth ceramic balls 20 may be used.

The ceramic granulated materials or crashed natural stones including the rare-earth ceramic balls 20 may be colored in a plurality of colors according to the component mixture ratio or the intended applications.

Hereinafter, operation of the active-water producing apparatus of the third embodiment will be described.

In the active-water producing apparatus 600, the water inlet 112 of the lid 111 is connected to the water pipe that allows water to flow therethrough. Thus, the water collected at the bottom 132 of the lowest-stage flow container 130 is spouted upward into the flow container 130 through a plurality of inlet holes 133 formed at the tip of the bottom 132. Then, as shown by the arrows in Fig. 16, the water spouted upward from the inlet holes 133 along the central axis of the flow container 130 flows from the ceiling wall to and along the inner wall, thereby fed back down to the bottom within the flow container 130. At this time, the rare-earth ceramic balls 20 are turned and moved in all directions, thereby being effectively in contact with the flowing water. Then, the water fills the lowest-stage flow container 130 and is spouted upward from the inlet holes 133 of the next upper-stage flow container 130 located downstream. In this way, the contact of the water with the ceramic balls 20 proceeds until the water is discharged from the outlet 116 of the lid 115 located over the highest-stage flow container 130. Active water is thus produced with the rare-earth ceramic balls 20.

According to the active-water producing apparatus of the third embodiment, the same effects as those of the first and the second embodiments can be obtained. The water is contact with the balls generally at the same speed and in the same way in each of the flow containers 130. Thus, the water keeps contact with the ceramic granulated materials or crashed natural stones to a large degree and the effective contact time can be increased. Therefore, the active-water producing capability would be significantly improved. Moreover, the volume of the flow container 130 defined by the cylindrical portion 131 and the bottom 132 can be set to any value, thus allowing standardization.

In particular, the flow container 130 of the third embodiment is a bottomed, cylindrical container. However, since the cylindrical portion 131 and the bottom 132 are separated from each other, the volume of the flow container 130 can be determined by the length of the cylindrical portion 131. In other words, if the thickness of the outer cylinder 10 is determined, the volume of the flow container 130 can be set to any value by the length of the cylindrical portion 131.

The foregoing embodiments have been described with respect to the case where each of the outer cylinder 10 and the flow containers 30, 40, 50, 60, 80, 130 contained therein has a cylindrical shape. However, the present invention is not limited to the aforementioned shape. For example, the outer cylinder 10 and the flow container may be a polygonal cylinder having at least a triangular shape in cross section. Particularly in the case where there are expected some design requirements as interior goods, the outer cylinder 10 and the flow container may be formed as a normal cylinder or a polygonal cylinder having at least a triangular shape in cross section, depending on the user's taste. It is desirable to form the outer cylinder 10 and the flow container as a clear container and to color the ceramic granulated materials or crashed natural stones in a plurality of colors. The inventors change the color of the ceramic granulated materials or crashed natural stones according to the function (effect) in order to indicate the property thereof.

Moreover, by forming each of the outer cylinder 10 and the flow containers 30, 40, 60, 80, 130 as a normal cylinder or a polygonal cylinder having at least a triangular shape in cross section, the bottoms 32, 42, 62, 82, 132 may have various shapes from an approximately conical shape to an approximately pyramidal shape of a polygonal pyramid having at least a triangular shape in cross section.

In the case where the design effects are expected as interior goods, the outer cylinder 10 may have any structure so long as the outer cylinder 10 has the water inlet 12, 112 at the bottom and the water outlet 16, 116 at the top, and contains at least one of the flow containers 30, 40, 50, 60, 80, 130 so as to enable water reflux.

An active-water producing apparatus is provided. Water flows into an outer cylinder through a water inlet of a lid provided on a bottom side. Then, the water is spouted from water inlet holes of a bottom of a flow container and forms a circulating water flow. Thereby, rare-earth ceramic balls are moved in all directions while being turned in an interior space of the flow container. The balls are uniformly moved. The circulating water become in contact with the balls efficiently and spouted from a water outlet of a lid provided at a top side.

## Claims

1. An active-water producing apparatus comprising:
an outer cylinder having a water inlet formed at a lower side and a water outlet formed at an upper side;
a flow container having a shape of a bottomed cylinder that is inserted into the outer cylinder, the flow container having a bottom made of a plate material of substantially a conical shape that is disposed coaxially with the outer cylinder, the flow container having an interior space divided by the bottom, the bottom having one of a first conical shape with a tip facing downward and a second conical shape with a tip facing upward, the first conical shape having one or more water inlet holes bored at the tip, and the second conical shape having one or more water inlet holes bored at an outer periphery thereof; and
a content composed of one of ceramic granulated materials and crushed natural stones, the content being contained in the flow container at a predetermined volume ratio;
wherein one or more of the flow containers are stacked in the outer cylinder according to a required active-water producing capacity.

2. An active-water producing apparatus according to claim 1 in which:
the flow container has a cylindrical portion inserted in the outer cylinder and the bottom separately provided and joined to the cylindrical portion; and
the bottom has one of the first conical shape and the second conical shape.

3. An active-water producing apparatus according to claim 1 in which:
the flow container comprises:
a first flow container having a shape of a bottomed cylinder that is inserted into the outer cylinder, the first flow container having a bottom of a flat plate shape, and the bottom having a multiplicity of water inlet holes uniformly over an entire plane thereof;
a second flow container having a shape of a bottomed cylinder that is inserted into the outer cylinder, the second flow container being disposed at an upstream side of the first flow container, and the second flow container having a bottom made of a plate material of substantially a conical shape that is disposed coaxially with the outer cylinder, the flow container having an interior space divided by the bottom;
the bottom of the second fluid container having one of the first conical shape and the second conical shape;
the flow container being composed of the first flow container and the second flow container as one unit, and one or more units of the flow containers being stacked in the outer cylinder according to the required active-water producing capacity.

4. An active-water producing apparatus according to claim 1 in which the outer cylinder and the flow container are formed of one of a transparent glass and a transparent synthetic resin, respectively.

5. An active-water producing apparatus according to claim 1 in which the water inlet holes of the bottom are inclined to an axis of the bottom so that the water flows in a spiral manner in the interior space of the flow container.
